# EUROPEAN PATENT APPLICATION

(11) **EP 1 691 495 A1**
(43) Date of publication of application: **16.08.2006**
(21) Application number: 05100916.5
(22) Date of filing: 09.02.2005
(51) Int. Cl.: H04B 10/08

(54) **Wavelength selective optical power measurement**

(71) Applicant: Agilent Technologies Inc, Palo Alto, CA 94303-0870 (US)
(72) Inventor: Beller, Josef, 72074 Tübingen (DE)
(74) Representative: Neuerburg, Gerhard

(57) **Abstract**

The present invention relates to an apparatus (100, 200) and to a method of wavelength selective optical power measurement, comprising the steps of selecting a plurality of at least partly different spectral parts of the optical signal under test (112, 212) in a cascaded way, directing the selected parts onto a corresponding number of photo detectors (103, 206a, 206, 216, 218), and comparing the power values determined by the photo detectors with predetermined values.

## Description

### BACKGROUND OF THE INVENTION

The present invention relates to wavelength selective optical power measurement.

Generally, wavelength selective optical power measurement is known in the prior art. Wavelength selective optical power measurements can be divided into a variety of different applications with different requirements. Standard tool for a wavelength selective optical power measurement is an optical spectrum analyzer (OSA). An OSA fulfils the common needs, e.g. a high resolution and a continuous wide tuning range.

### SUMMARY OF THE INVENTION

It is an object of the invention to provide improved wavelength sensitive optical power measurement.

The object is solved by the independent claims.

The present invention comprises the perception that it is more and more necessary to perform wavelength selective measurements due to the fast growing number of different wavelengths present in today's optical fibers. Today many different wavelengths are used because service providers have to use the same optical fiber for different services, e.g. television and telephone, to be cost efficient. Therefore, corresponding fiber optic networks often share their optical path with many signals operating at different wavelengths. DWDM (dense wavelength division multiplexing) systems carry a plurality of different closely spaced wavelengths whereas CWDM (coarse wavelength division multiplexing) systems typically are composed of only a few different closely, sometimes equally, e.g. by 20 nm, spaced signals. Typical wavelengths frequently used today are 1310 nm, 1490 nm and 1550 nm.

Moreover, there is a strong trend called "fiber to the home", i.e., using optical fibers also on the very last meters to the home of the user instead of copper wires. Therefore, for checking such optical fibers the wavelength selective optical power measurement has to be performed at each home of the user in short time.

However, today's low-cost power meters are not having a resolution which is sufficient to measure such closely spaced wavelengths as mentioned above. Such power meters would only measure the total power of all wavelengths together. On the other side, an OSA is too expensive for such kind of applications. This is because these outside applications are quite cost sensitive and require both simple and flexible solutions in terms of manufacturability and application fit.

Additionally, when examining CWDM systems a high resolution, continuous wavelength scan over the whole system bands is not necessarily required. Power measurements at the center of the individual signal channel is sufficient in most cases.

Thus, a wavelength selective instrument capable of measuring optical power at a given number of wavelengths, e.g. at 1310 nm, 1490 nm and 1550 nm for Fiber-to-the-premises (FTTP) deployment, is the right tool.

For this and similar applications a preferably simple solution according to an embodiment of the present invention is an apparatus comprising at least one optical wavelength selective component or selector that selects a certain wavelength or spectral part of an optical signal under test comprising different wavelengths and directs this part onto at least one corresponding photo detector for that certain part.

In a preferred example of the present invention the apparatus comprises a cascaded arrangement of more than one selector and a corresponding number of photo detectors to be able to detect more than one wavelength at the same time. Such an arrangement is flexible in a way that it can easily be scaled to a varying number of wavelength channels.

Preferred embodiments of the present invention comprise a compact, lightweight and further preferred robust encapsulated arrangement of multiple filters and photo detectors that allows the usage of standard packages for photo detectors and readily available standard filter dies.

The predominant advantages of these preferred embodiments of the present invention are as follows:

It is possible to generate a fully automated manufacturing process for manufacturing the apparatus since the apparatus can be built up with the use of small, reliable, cost efficient, flexible and scalable standard parts, like reflective and transmissive thin film filters and TO packages for photo diodes.

Therefore, such a preferred apparatus is small and inexpensive so it can be preferably incorporated into a hand-held instrument for fiber-to-the-home employment, where the demand for thousands of measurements make the service providers and fiber installers provide each of their employees with their own apparatus.

And it is therefore possible to provide an easy implementation of an optical power measurement with different wavelength ranges.

In other preferred embodiments the total optical power over a wide wavelength range can be measured and displayed on a display at the same time. Here, the optical power in selective wavelength ranges and the total optical power can be measured and displayed simultaneously.

It is possible that such a display indicates the measured wavelength or just indicates if a certain detector of the apparatus has detected a signal above a predetermined threshold. The indication can be done by two LEDs, e.g. one green diode and one red diode, indicating a detection of the wavelength signal above a predetermined threshold of this detector, e.g. by the green diode, and no detection, e.g. by the red diode.

However, if the display indicates the measured wavelength it is possible to display the measured wavelength on a linear scale or on a logarithmic scale. Moreover, it is possible to display the measured wavelength as absolute values or as relative values. All those values can be displayed in all known physical units.

Other preferred embodiments are shown by the dependent claims.

The invention can be partly embodied or supported by one or more suitable software programs, which can be stored on or otherwise provided by any kind of data carrier, and which might be executed in or by any suitable data processing unit. Software programs or routines are preferably applied to the realization of the inventive method.

### BRIEF DESCRIPTION OF THE DRAWINGS

Other objects and many of the attendant advantages of the present invention will be readily appreciated and become better understood by reference to the following detailed description when considering in connection with the accompanied drawings. The components in the drawings are not necessarily to scale, emphasis instead being placed upon clearly illustrating the principles of the present invention. Features that are substantially or functionally equal or similar will be referred to with the same reference sign(s).
- Fig. 1: shows a schematic illustration of a first embodiment of the present invention,
- Fig. 2: shows a schematic illustration of a second embodiment of the present invention,
- Fig. 3: shows a graph depicting a reflectivity curve of the wavelength reflective optical filter 105 of the first embodiment of Fig. 1.

- Fig. 4: shows a graph depicting a transmission curve of the wavelength transmissive optical filter 203 of the second embodiment of Fig. 2.

### DETAILED DESCRIPTION OF PREFERRED EMBODIMENTS OF THE INVENTION

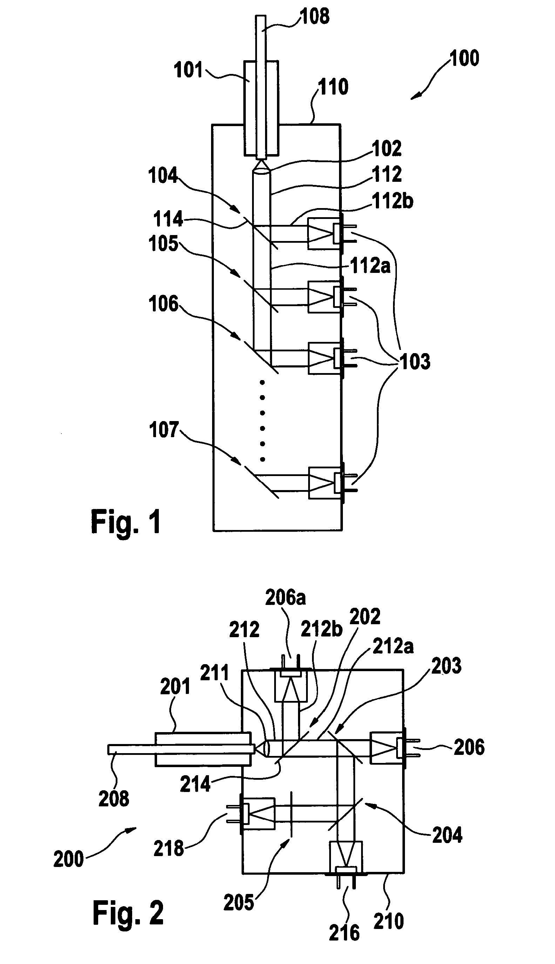

Referring now in greater detail to the drawings, Fig. 1 shows a schematic illustration of an apparatus 100 according to a first embodiment of the present invention. The apparatus 100 of Fig. 1 comprises an input fiber 108, which is hold in a fiber holder 101 for fiber alignment. The holder 101 is part of a housing 110 of the apparatus 100. The fiber 108 serves to transmit and guide an optical signal under test, in the following called light beam, into the housing 110. The light beam is provided by the fiber 108 to a collimating lens 102 to collimate the beam to form a parallel beam 112, which then hits a beam splitter 104. Beam splitter 104 typically comprises a semi transparent mirror 114.

The beam splitter 104 splits the parallel beam 112 into two parts 112a and 112b. One part 112a of the beam 112 is transmitted to a first wavelength selective reflective filter 105. The other part 112b of the beam 112 is reflected at a 90°(or any other) angle to a first one of photo detectors 103. The first one of photo detectors 103 serves to measure the total wavelength selective optical power of the beam 112.

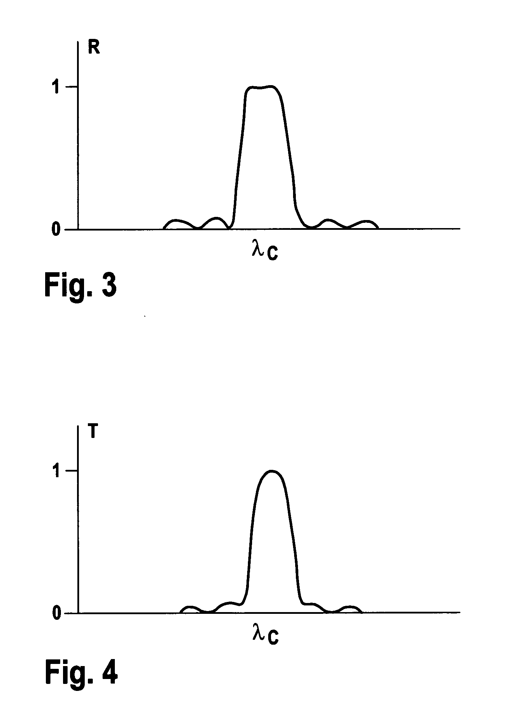

The first wavelength selective reflective optical filter 105 has a center wavelength λ_{c}. At the center wavelength λ_{c} filter 105 has a maximum of reflectivity as shown in Fig. 3. Therefore, only a fraction of the wavelength spectrum defined by the filter characteristic of filter 105, which is depicted exemplarily in Figure 3, hits the respective detector 103. By inserting further wavelength selective reflective optical filter dies 106, ..., 107 into the optical beam, multiple wavelength segments of the optical spectrum of the light beam 112 can be extracted and selectively be measured by detectors 103. Wavelength selective reflective optical filter dies 106, ..., 107 and detectors 103 provide a cascaded arrangement of filters and detectors which is capable to detect more than one wavelength of the incoming signal 112.

Fig. 2 shows a schematic illustration of another apparatus 200 according to a second embodiment of the present invention. The apparatus 200 of Fig. 2 comprises a similar cascaded filter and detector arrangement compared to the cascaded filter and detector arrangement of Fig. 1. Instead of the reflective optical filters 105, 106, ..., 107 the filter and detector arrangement of Fig. 2 comprises transmissive optical filters 203, 204 and 205.

Apparatus 200 of Fig. 2 comprises an input fiber 208, which is hold in a fiber holder 201 for fiber alignment. The holder 201 is part of a housing 210 of the apparatus 200. The fiber 208 serves to transmit and guide an optical signal under test, in the following called light beam, into the housing 210. The light beam is provided by the fiber 208 to a collimating lense 211 to collimate the beam to form a parallel beam 212, which then hits a beam splitter 202. Beam splitter 202 typically comprises a semi transparent mirror 214.

The beam splitter 202 splits the parallel beam 212 into two parts 212a and 212b. One part 212a of the beam 212 is transmitted to a first wavelength selective transmissive optical filter 203. The other part 212b is reflected at a 90° (or any other) angle to a first photo detector 206a. Photo detector 206a serves to measure the total wavelength selective optical power of the beam 212.

The first wavelength selective transmissive optical filter 203 has a center wavelength λ_{C}. At the center wavelength λ_{C} filter 203 has a maximum of transmissivity as shown in Fig. 4. Therefore, only a fraction of the wavelength spectrum defined by the filter characteristic of filter 203, which is depicted exemplarily in Fig. 4, it is the respective detector 206. By inserting further wavelength selective transmissive optical filter dies 204 and 205 into the path of the optical beam, multiple wavelength segments of the optical spectrum of the light beam 212 can be extracted and selectively be measured by respective detectors 216 and 218.

In both apparatuses of both Figures 1 and 2 the output signals of the photo detectors 103 and 206a, 206, 216, 218, respectively, are fed to a not shown evaluation unit, preferably comprising an amplifier which is connected to the photo detectors 103 and 206a, 206, 216, 218, respectively. It is possible to use one amplifier for two or more of the detectors 103, 206a, 206, 216, 218 or to use one amplifier for each of the detectors 103, 206a, 206, 216, 218.

The amplifiers can be connected to a not shown indicator, preferably comprising a display or speaker for indicating the result of the measurement. It is possible that the display indicates the measured wavelength(s) or just indicates if a certain detector 103, 206a, 206, 216, 218 has detected a signal above a predetermined threshold.

If the indicator comprises a display the indication can be done by two LEDs, e.g. one green diode and one red diode, indicating a detection of the wavelength signal above a predetermined threshold of this detector, e.g. by the green diode, and no detection, e.g. by the red diode.

However, if the display indicates the measured wavelength (s) it is possible to display the measured wavelength on a linear scale or on a logarithmic scale. Moreover, it is possible to display the measured wavelength as absolute values or as relative values. All those values can be displayed in all known units, e.g. in mW, dB or dBm.

As filters 105, 106, ..., 107, 203, 204, 205 any known filter can be used. E.g. gratings, TFF (thin film filters), Fabry-Perot filters, or other interference filters can be used.

As mentioned above Fig. 3 shows a graph depicting a reflectivity curve of the wavelength selective reflective optical filter 105 of the first embodiment of Fig. 1.

Fig. 4 shows a graph depicting a transmission curve of the wavelength transmissive optical filter 203 of the second embodiment of Fig. 2.

List of the reference signs used in the drawings:
- 100: Apparatus of Fig. 1
- 101: Fiber holder for fiber alignment
- 102: Collimating lens
- 103: Photo detectors
- 104: Beam splitter
- 105: Wavelength selective reflective filter
- 106: Wavelength selective reflective filter
- 107: Wavelength selective reflective filter
- 108: Fiber
- 110: Housing
- 112: Parallel beam
- 112a: One part of the parallel beam 112
- 112b: Other part of the parallel beam 112
- 114: Semi transparent mirror of beam splitter 104
- 201: Fiber holder for fiber alignment
- 200: Apparatus of Fig. 2
- 202: Beam splitter
- 203: Wavelength selective transmissive filter
- 204: Wavelength selective transmissive filter
- 205: 205 Wavelength selective transmissive filter
- 206a: First photo detector
- 206: Second photo detector
- 208: Fiber
- 210: Housing
- 211: Collimating lense
- 212: Parallel beam
- 212a: One part of parallel beam 212
- 212b: Other part of parallel beam 212
- 214: Semi transparent mirror of beam splitter 202
- 216: Third photo detector
- 218: Fourth photo detector
- R: Reflectivity of the wavelength selective reflective optical filter 105
- λ_{C} in Fig. 3: Center wavelength of filter 105
- T: Transmissivity of the wavelength selective transmissive optical filter 203
- λ_{c} in Fig. 4: Center wavelength of filter 203

## Claims

1. A method of wavelength selective optical power measurement, comprising the steps of:
selecting a plurality of at least partly different spectral parts of the optical signal under test (112, 212) in a cascaded way,
directing the selected parts onto a corresponding number of photo detectors (103, 206a, 206, 216, 218), and
comparing the power values determined by the photo detectors with predetermined values.

2. The method of claim 1, further comprising the steps of generating at least one of: an optical and an acoustical signal indicative of whether a power value is greater than a predetermined value.

3. The method of claim 1 or any one of the above claims, further comprising the step of:
selecting a certain spectral part by wavelength selective reflective filtering the optical signal under test (112, 212).

4. The method of claim 1 or any one of the above claims, further comprising the step of:
selecting a certain spectral part by wavelength selective transmissive filtering the optical signal under test (112, 212).

5. The method of claim 1 or any one of the above claims, further comprising the steps of:
measuring and displaying the total optical power of the optical signal under test (112, 212) at the same time.

6. A software program or product, preferably stored on a data carrier, for executing the method of one of the claims 1 to 5, when run on a data processing system such as a computer.

7. An apparatus (100, 200) for wavelength selective optical power measurement of an optical signal under test (112, 212), which comprises different wavelengths, comprising:
a cascaded arrangement comprising a plurality of optical wavelength selective components (105, 106, 107, 203, 204, 205) for selecting at least partly different spectral parts of the optical signal under test (112, 212),
a plurality of photo detectors (103, 206a, 206, 216, 218), and
and signal directing means adapted for directing each of the selected parts onto a corresponding photo detector (103, 206a, 206, 216, 218).

8. The apparatus of claim 7,
whereby the at least one optical wavelength selective component (105, 106, 107, 203, 204, 205) comprises a wavelength selective reflective filter element (105, 106, 107).

9. The apparatus of claim 7,
whereby the at least one optical wavelength selective component (105, 106, 107, 203, 204, 205) comprises a wavelength selective transmissive filter element (203. 204. 205).

10. The apparatus of claim 7 or any one of the above claims 8-9, further comprising:
an evaluation unit for comparing the power value of the detected part with a predetermined value, and
an indicator for generating a signal indicative of whether the power value
is above the predetermined value.

11. The apparatus of claim 7 or any one of the above claims 8-10, further comprising:
a non wavelength selective beam splitter (104, 202) for measuring the total optical power of the optical signal under test (112, 212).

12. The apparatus of claim 7 or any one of the above claims 8-10, further comprising:
a water resistant housing (110, 210) for encapsulating the arrangement.

13. A fully automated manufacturing process for manufacturing the apparatus (100, 200) of claim 7 or any one of the above claims 8-12, comprising:
building up the apparatus (100, 200) with the use of standard reflective and transmissive thin film filters (105, 106, 107, 203, 204, 205) and TO packages for photo diodes (103, 206a, 206, 216, 218).
